# EUROPEAN PATENT SPECIFICATION

(11) **EP 1 784 448 B1**
(45) Date of publication and mention of the grant of the patent: **31.12.2008**
(21) Application number: 05794216.1
(22) Date of filing: 02.09.2005
(51) Int. Cl.: C08K 3/34, C11D 3/37

(54) **WATER SOLUBLE POLYAMIDE COMPOSITIONS, SOLUTIONS THEREOF, FILMS AND SHEETS THEREFROM AND PROCESS OF MAKING FILMS AND SHEETS THEREFROM**
WASSERLÖSLICHE POLYAMIDZUSAMMENSETZUNGEN, LÖSUNGEN DAMIT, SCHICHTEN UND FOLIEN DAVON UND HERSTELLUNGSVERFAHREN FÜR SCHICHTEN UND FOLIEN DAVON
COMPOSITIONS DE POLYAMIDE HYDROSOLUBLES, SOLUTIONS DE CELLES-CI, FILMS ET FEUILLES DE CELLES-CI ET PROCEDE DE FABRICATION DE CEUX-CI

(30) Priority: 03.09.2004 US 607014 P
(43) Date of publication of application: 16.05.2007
(73) Proprietor: E.I. DU PONT DE NEMOURS AND COMPANY, Wilmington, DE 19898 (US)
(72) Inventor: PAGILAGAN, Rolando, Umali, Parkersburg, WV 26104 (US)
(74) Representative: Morf, Jan Stefan
(86) International application number: PCT/US2005/031671
(87) International publication number: WO 2006/029138

(56) References cited:
- EP-A- 1 312 582
- US-A- 5 571 851
- US-A1- 2003 232 159

## Description

### Field of the Invention

The present invention relates to compositions of water-soluble polyamides and nanoclays. More particularly the invention further relates to aqueous solutions suitable for use in making water-soluble polyamide films and sheets by solvent casting, as well as methods for preparing water-soluble polyamide films and sheets. The resulting films and sheets may be used as water-soluble packaging.

### Background of the Invention

There is a desire to provide convenient packaging for chemicals used by workers and consumers. One approach used is to supply such chemicals in convenient, pre-measured unit doses in a packaging material that will dissolve or otherwise release the chemicals under conditions of use, without requiring that the user measure each dose. This has the further advantage of limiting the exposure of workers and consumers to certain chemicals, as it allows the user to handle the chemicals conveniently without coming into direct contact with them. Often water-soluble packaging materials are used. For example, laundry, dishwasher, or other detergents; pesticides; herbicides, agricultural chemicals; bleaches; and the like can be packaged in water-soluble materials in appropriately-sized unit doses. When used in contact with water (for example, when put into a washing machine in the case of laundry detergent), the water-soluble packaging material dissolves, and the contents are released.

Currently poly(vinyl alcohol) copolymers (PVA) are used for many of these applications. However, PVA has limited chemical resistance and thermal stability and a combination of moisture and elevated temperatures or the presence of acids and/or bases can catalyze the hydrolysis of any acetate or other groups that may be present in the polymer chain, which can result in its reduced solubility in cold water. These properties give PVA a poor shelf life, as its solubility in water is adversely affected by storage time and conditions

Polyamides are well known for their strength, toughness, abrasion resistance, lubricity, and chemical resistance, and these properties have caused them to be widely used in basic packaging applications. See generally, Kohan, M.I. Nylon Plastics Handbook, Hanser/Gardner Publications, Inc., 1995, pages 514, 540, and 568-569. However polyamides have not been extensively adopted for applications where water solubility is required.

The patent literature includes various teachings regarding water-soluble nylons. U.S. patent 4,895,660 describes water-soluble sulfonated aromatic polyamides and polyureas that are cross-linked ionically with multi-valent metals for use in membranes, coatings, and adhesives. Japanese published patent application 56-93704 describes a photosensitive composition comprising a water-soluble polyamide containing sodium sulfonate groups, a polymerizable unsaturated compound, and a sensitizer for printing plate applications. Japanese published patent application 10-007903 claims the use of alcohol-water solutions of polyamides commonly known as PA66, PA46, PA6, and PA12 with a 30 water-soluble methoxymethylated polyamide and thiocyanate salts as wiper blade coatings to improve performance and durability of the blades. U.S. patent 4,323,639 and U.S. patent 5,688,632 are both directed to water-soluble copolyamides containing polyether segments of 150 to 1500 molecular weight. The polyamides are obtained from polyether diamines and aliphatic dicarboxylic acids. These water-soluble polyamides are used in conjunction with a photopolymerizable compound and a photoinitiator for printing plate applications. US published patent application 2003-0232159 discloses a packaging material comprising water-soluble polyamides derived from adipic acid and ether diamines. The water-soluble polyamides have decreased solubility with increased molecular weight.

However, none of the aforementioned teachings provide a method for controlling the viscosity of a polyamide solution without adjusting the concentration of the solution or molecular weight of the polyamide. The ability to control solution viscosity independent of polyamide molecular weight and concentration is important in the manufacture of films and sheets by solution casting.

Films and sheets for making packaging can be formed by solvent casting. The thickness of the cast film can be controlled by varying the thickness of the solution bed as it is deposited on the casting belt. When the viscosity of the solution is low, it is much harder to control the film thickness, making it desirable to use solutions with relatively high viscosities. The viscosity, in turn, is controlled by the concentration and molecular weight of the polymer in the solution. Polyamides with higher molecular weights will generally form solutions with higher viscosities than polyamides with lower molecular weights. However, most polyamides decrease in solubility as they go up in molecular weight, which leads to lower concentration solutions.

It would be desirable to obtain a polyamide composition that could be used to make water-soluble packaging and that had sufficiently high viscosity to be conveniently solution cast. A feature of the invention is to provide a water-soluble polyamide based packaging material that once solution cast can be readily formed into pouches, bags, and the like to suit a variety of applications. An advantage of the compositions of the invention is their versatility, as they may incorporate additional components such as stabilizers, plasticizers, colorants and the like without impairing their performance. A further advantage of the compositions of the invention is that they can be used to make packaging materials exhibiting improved shelf life versus incumbent materials. These and other objects, features and advantages of the present invention will become better understood upon having reference to the detailed description of the invention herein.

### Summary of the Invention

There is disclosed and claimed herein a water-soluble polyamide composition comprising
(a) 70 to 99.5 weight percent of at least one polyamide having a solubility in water at 23 °C of at least 1 weight percent and derived from monomers comprising adipic acid and at least one ether diamine of the general formula (I) and/or (II) having a molecular weight of between 148 and 396

   H₂N-R₁-O-R₂-O-R₃-NH₂ (I)

   H₂N-R₄-(O-CH₂-CH₂)ₓ-O-R₅-NH₂ (II)

   wherein R₁, R₂, R₃, R₄, and R₅ are independently either (CH₂-CH₂) or (CH₂-CH₂-CH₂) and x is an integer between 2 and 6, inclusive; and
(b) 0.5 to 30 weight percent of at least one nanoclay.

Moreover, solutions of water-soluble polyamides suitable for use in casting into films are also disclosed and claimed, in which from 40 to 99 weight percent of a solvent comprising 80 to 100 weight percent water and 0 to 20 weight percent of one or more alcohols, are combined with from 1 to 60 weight percent of the aforementioned at least one polyamide and with from 0.5 to 30 weight percent, based on the weight of the polyamide, of the aforementioned at least one nanoclay and in which the polyamide is dissolved and the nanoclay dispersed.

The use of these compositions as sheets and films, and more particularly as packaging materials, is also disclosed and claimed. Solution casting is considered a preferred method of manufacture for these purposes. The packaging of detergents, such as laundry and dishwater detergents; and the packaging of agricultural chemicals, such as pesticides and herbicides, are two groups of distinct uses contemplated as within the scope of this invention.

### Detailed Description of the Invention

The polyamide compositions of the present invention comprise blends in which at least one nanoclay is substantially uniformly dispersed in at least one water-soluble polyamide. The polyamide has a solubility in water of 23 °C of at least 1 weight percent. It is derived from adipic acid and at least one ether diamine monomer, the basic details of which are set forth above.

Preferred ether diamines include triethyleneglycol diamine [H₂N-CH₂-CH₂-O-CH₂-CH₂-O-CH₂-CH₂-NH₂]; 1,2-bis(gamma-aminopropoxy)ethane [H₂N-CH₂-CH₂-CH₂-O-CH₂-CH₂-O-CH₂-CH₂-CH₂-NH₂]; and the diamine of general formula (II) where R₄ and R₅ are (CH₂-CH₂-CH₂) and x is 2 [H₂N-CH₂-CH₂-CH₂-(O-CH₂-CH₂)₂-O-CH₂-CH₂-CH₂-NH₂].

In addition to adipic acid and one or more ether diamine monomers represented by the general formula (I) and/or (II) above, the polyamide may be derived from additional monomers such as aliphatic diamines, polyether diamines, lactams, polyether dicarboxylic acids, aliphatic dicarboxylic acids other than adipic acid, and the like, provided that the water solubility of the polyamide is not adversely affected. Preferred alkylene diamines include 1,6-hexanediamine, 2-methyl-1,5-pentanediamine and 1,4-butanediamine. Preferred lactams include caprolactam.

The polyamide preferably has a relative viscosity of less than about 60 and more preferably between about 15 and about 45, as measured in 90% formic acid at 25 °C in accordance with ASTM D789.

The nanoclay used in the present invention is a layered silicate, preferably an aluminum or magnesium silicate. The nanoclays will generally be platelet shaped and have a diameter in the range of about 10 to about 5000 nm. The layer thickness is less than about 2 nm. The nanoclay will preferably be a swellable clay, meaning that the clay has the ability to absorb water or other polar organic liquids such as methanol and ethanol between the layers. When the liquids are absorbed, the nanoclay swells. At least one dimension of the nanoclay particles will be less than about 20 nm, and preferably less than about 5 nm. The nanoclays contain interlayer cations such as alkali and alkaline earth metal cations. Preferred cations include sodium and calcium ions. The nanoclays are used in an untreated form, meaning that they are not treated with an agent, such as a surfactant, to exchange metal cations present between the layers with organic cations such as ammonium or other onium ions.

Preferred nanoclays include smectite clays such as montmorillonite, hectorite, saponite, beidelllite, nontronite, bentonite, saponite, and the like. Both natural and synthetic nanoclays may be used. Natural nanoclay such as Cloisite® Na+ and synthetic smectite clays such as Laponite® are available from Southern Clay Products.

The water-soluble polyamide is present in the composition in 70 to 99 weight percent, or more preferably in 92 to 99 weight percent, based on the total weight of the composition. The nanoclay is present in the composition in 0.5 to 30 weight percent, or more preferably in 0.5 to 8 weight percent, based on the weight of the water-soluble polyamide.

The compositions, solutions, and films of the present invention may further comprise additional components such as release agents, plasticizers, stabilizers (such as thermal, oxidative, and light stabilizers), lubricants, anti-foaming agents, and colorants. These additional components may be added in conventional amounts to achieve the intended effects without deleteriously impacting the water-soluble performance of the resulting composition, as will be appreciated by those having skill in the field to which the invention pertains.

The compositions of the present invention are formed by conventionally blending the water-soluble polyamide and nanoclay in an aqueous solvent, to yield an aqueous solution. In the aqueous solutions, up to about 20 weight percent of the water may be replaced with one or more alcohols such as methanol, ethanol, i-propanol, and the like. In the aqueous solutions of the present invention, polyamide is dissolved in the solvent and the nanoclay is well dispersed, but not dissolved, in the solvent. The suspensions are substantially clear, but may exhibit minor turbidity.

The solutions may be prepared by allowing the nanoclay to stand in water and disperse. Alternatively, a mixer, preferably a high-shear mixer, may be used to facilitate dispersion of the nanoclay into water. Ultrasound may also be used to facilitate the dispersion of the nanoclay. The nanoclay dispersion and an aqueous polyamide solution may be combined and well-mixed. Alternatively, the nanoclay may be added directly into a solution of the water-soluble polyamide or the polyamide may be added directly into a dispersion of the nanoclay or both water-soluble polyamide and the nanoclay may be added to water at the same time. These alternative methods, however, may require more time and higher shear to achieve dispersion of the nanoclay. Additional additives may be added dissolved in water, one or more alcohols, or in an aqueous solution containing one or more alcohols. The solvent is then removed to yield a the blend of water-soluble polyamide and nanoclay.

The solutions of polyamide containing dispersed nanoclay may be formed into films or sheets by conventional solvent casting techniques. The films preferably have a thickness of up to about 3 mm. The film or sheet may comprise a single layer, or may comprise two or more layers. In multilayered films or sheets, additional layers may comprise other polymers.

The films and sheets may be formed into water-soluble packaging materials. The packaging materials can be in the form of films, pouches, bags, and the like.

### Examples

### Preparation of Triethyleneglycol/Adipic Acid/Caprolactam polymer (1:1:1 mol ratio)

A triethyleneglycol diammonium adipate salt solution with a pH of 7.29 (49.19 weight percent in water; 48.6 lb) prepared from triethyleneglycol diamine and adipic acid, and containing 421 ppm (calculated relative to the amount of dry salt) of sodium hypophosphite monohydrate was charged into an autoclave. Then a caprolactam solution (83.59 weight percent in water; 11.0 lb) was added. The vessel was purged with nitrogen gas. The mixture was then agitated and heated until the autogenous pressure reached 250 psig. The steam was then vented at such a rate as to maintain the pressure at 250 psig. When the temperature of the reaction mixture reached 230 °C, the pressure was slowly reduced by venting more steam at a rate such that atmospheric pressure was reached in 60 minutes. Vacuum was then applied and the pressure held at 500 mm Hg for 50 minutes. The molten polyamide was then discharged into a bed of dry ice. The solid polyamide was removed from the dry ice and allowed to warm to room temperature. The polyamide is referred to hereafter as "polyamide A."

The RV of the polymer was 17.7 as measured in 90% formic acid at 25 °C in accordance with ASTM D789.

### Comparative Example A

A 50.0 weight percent solution was prepared initially by mixing 100.0 g of polyamide A with 100.0 g of demineralized water. The mixture was allowed to stand until the polymer was completely dissolved. An additional 22.0 g of demineralized water was added to the solution. The resulting solution had a concentration of 45.0 weight percent of the polymer. The solution viscosity at 25 °C measured using a Brookfield viscometer was 2775 centipoises.

### Example 1

A 50.0 weight percent solution of polyamide A was prepared as in Comparative Example A. Cloisite® Na+ montmorillonite nanoclay (supplied by Southern Clay Products, Gonzalez, TX) (3.0 g) was added to 22.0 g of demineralized water and allowed to stand for two days, after which time visual inspection indicated that the montmorillonite was well-dispersed in the water. The polyamide A solution and montmorillonite dispersions were combined and mixed thoroughly with a spatula. Visual inspection indicated that the montmorillonite was well-dispersed in the mixture. The viscosity of the suspension at 25 °C measured using a Brookfield viscometer was 12,800 centipoises.

### Example 2

A nanoclay dispersion was prepared by adding Cloisite® Na+ montmorillonite (13.0 g) to demineralized water (227.0 g). The mixture was allowed to stand for 24 hours and was then sonicated for 60 minutes using a Misonix Sonicator Model XL 2020 at an amplitude setting of 4. The clay dispersion was then added to 1000.0 g of a 42.5 weight percent aqueous solution of polyamide A (prepared as in Comparative Example A and having a relative viscosity of 18.0). The mixture was manually mixed with a spatula until the dispersion was visually uniform. The mixture was then sonicated for 30 minutes at an amplitude setting of 4.
Film samples were prepared by spreading the mixture of polyamide A with Cloisite® Na+ montmorillonite and a 42.5 weight percent aqueous solution of polyamide A alone on a 0.5 inch slab of polyethylene using a metal blade. The films were allowed to air dry for 24 hours and then placed in a vacuum oven set at room temperature and 15 inches of Hg for 12-14 hours. The temperature in the oven was gradually increased to 70 °C and the samples were allowed to dry for at least 48 hours. The resulting films had a thickness of about 16-21 mil.
The tensile modulus at 5% strain was determined for the films according to ASTM D1708-2a. The film made from a solution of polyamide A alone had a tensile modulus of 37.8 Mpsi and the film made from the mixture of polyamide A and Cloisite® Na+ montmorillonite had a tensile modulus of 50.5 Mpsi, demonstrating a substantial improvement in modulus afforded by the incorporation of the montmorillonite nanoclay.

## Claims

1. A water-soluble polyamide composition comprising
(a) 70 to 99.5 weight percent of at least one polyamide having a solubility in water at 23 °C of at least 1 weight percent and derived from monomers comprising adipic acid and at least one ether diamine of the general formula (I) and/or (II) having a molecular weight of between 148 and 396
H₂N-R₁-O-R₂-O-R₃-NH₂ (I)
H₂N-R₄-(O-CH₂-CH₂)ₓ-O-R₅-NH₂ (II)
wherein R₁, R₂, R₃, R₄, and R₅ are independently either (CH₂-CH₂) or (CH₂-CH₂-CH₂) and x is an integer between 2 and 6, inclusive; and
(b) 0.5 to 30 weight percent of at least one nanoclay.

2. The composition of claim 1, wherein the nanoclay is a smectite nanoclay.

3. The composition of claim 1, wherein the nanoclay is untreated.

4. The composition of claim 1, wherein the monomers further comprise one or more lactams, aliphatic diamines, aliphatic dicarboxylic acids other than adipic acid, and/or polyether dicarboxylic acids.

5. The composition of claim 1, wherein the monomers further comprise caprolactam.

6. A solution for use in casting into films, comprising
(a) 40 to 99 weight percent of a solvent comprising 80 to 100 weight percent water and 0 to 20 weight percent of one or more alcohols;
(b) 1 to 60 weight percent of at least one polyamide having a solubility in water at 23 °C of at least 1 weight percent and derived from monomers comprising adipic acid and at least one ether diamine of the general formula (I) and/or (II) having a molecular weight of between 148 and 396
H₂N-R₁-O-R₂-O-R₃-NH₂ (I)
H₂N-R₄-(O-CH₂-CH₂)ₓ-O-R₅-NH₂ (II)
wherein R₁, R₂, R₃, R₄, and R₅ are independently either (CH₂-CH₂) or (CH₂-CH₂-CH₂) and x is an integer between 2 and 6, inclusive; and
(c) 0.5 to 30 weight percent, based on the weight of the water-soluble polyamide, of at least one nanoclay;
wherein the polyamide is dissolved in the solvent and the nanoclay is dispersed in the solvent.

7. The solution of claim 6, wherein the nanoclay is a smectite nanoclay.

8. The solution of claim 6, wherein the nanoclay is untreated.

9. The solution of claim 6, wherein the monomers further comprise one or more lactams, aliphatic diamines, aliphatic dicarboxylic acids other than adipic acid, and/or polyether dicarboxylic acids.

10. The solution of claim 6, wherein the monomer further comprise caprolactam.

11. A method of making a film or sheet, comprising solution casting the solution of claim 6.

12. A sheet or film made by the method of claim 11.

13. A sheet or film comprising the composition of claim 1.

14. A multilayered sheet or film comprising the composition of claim 1.

15. Packaging material comprising the sheet or film of claim 12.

16. An article made from the composition of Claim 1 in the form of a pouch or bag.

17. The article of Claim 16 which further contains detergents therein selected from the group consisting of laundry detergents and dishwater detergents.

18. The article of Claim 16 which further contains agricultural chemicals therein selected from the group consisting of pesticides and herbicides.

## Patentansprüche

1. Wasserlösliche Polyamidzusammensetzung, die aufweist:
(a) 70 bis 99,5 Gew.-% mindestens eines Polyamids, das eine Löslichkeit in Wasser bei 23°C von mindestens 1 Gew.-% aufweist und von Monomeren abgeleitet ist, die Adipinsäure und mindestens ein Etherdiamin gemäß der allgemeinen Formel (I) und/oder (II) mit einem Molekulargewicht zwischen 148 und 396 aufweisen,
H₂N-R₁-O-R₂-O-R₃-NH₂ (I)
H₂N-R₄-(O-CH₂-CH₂)ₓ-O-R₅-NE₂ (II)
wobei R₁, R₂, R₃, R₄ und R₅ unabhängig voneinander entweder (CH₂-CH₂) oder (CH₂-CH₂-CH₂) sind und x eine ganze Zahl zwischen einschließlich 2 und 6 ist; und
(b) 0,5 bis 30 Gew.-% mindestens eines Nanotons.

2. Zusammensetzung nach Anspruch 1, wobei der Nanoton ein Smektit-Nanoton ist.

3. Zusammensetzung nach Anspruch 1, wobei der Nanoton unbehandelt ist.

4. Zusammensetzung nach Anspruch 1, wobei die Monomere ferner ein oder mehrere Lactame, aliphatische Diamine, andere aliphatische Dicarbonsäuren als Adipinsäure und/oder Polyether-Dicarbonsäuren aufweisen.

5. Zusammensetzung nach Anspruch 1, wobei die Monomere ferner Caprolactam aufweisen.

6. Lösung zur Verwendung beim Foliengießen, die aufweist:
(a) 40 bis 99 Gew.-% Lösungsmittel, das 80 bis 100 Gew.-% Wasser und 0 bis 20 Gew.-% eines oder mehrerer Alkohole aufweist;
(b) 1 bis 60 Gew.-% mindestens eines Polyamids, das eine Löslichkeit in Wasser bei 23°C von mindestens 1 Gew.-% aufweist und von Monomeren abgeleitet ist, die Adipinsäure und mindestens ein Etherdiamin gemäß der allgemeinen Formel (I) und/oder (II) mit einem Molekulargewicht zwischen 148 und 396 aufweisen,
H₂N-R₁-O-R₂-O-R₃-NH₂ (I)
H₂N-R₄-(O-CH₂-CH₂)ₓ-O-R₅-NH₂ (II)
wobei R₁, R₂, R₃, R₄ und R₅ unabhängig voneinander entweder (CH₂-CH₂) oder (CH₂-CH₂-CH₂) sind und x eine ganze Zahl zwischen einschließlich 2 und 6 ist; und
(c) 0,5 bis 30 Gew.-% mindestens eines Nanotons, bezogen auf das Gewicht des wasserlöslichen Polyamids;
wobei das Polyamid in dem Lösungsmittel aufgelöst und der Nanoton in dem Lösungsmittel dispergiert ist.

7. Lösung nach Anspruch 6, wobei der Nanoton ein Smektit-Nanoton ist.

8. Lösung nach Anspruch 6, wobei der Nanoton unbehandelt ist.

9. Lösung nach Anspruch 6, wobei die Monomere ferner ein oder mehrere Lactame, aliphatische Diamine, andere aliphatische Dicarbonsäuren als Adipinsäure und/oder Polyether-Dicarbonsäuren aufweisen.

10. Lösung nach Anspruch 6, wobei das Monomer ferner Caprolactam aufweist.

11. Verfahren zur Herstellung eines Films oder einer Folie mit Gießen der Folie aus der Lösung nach Anspruch 6.

12. Folie oder Film, hergestellt durch das Verfahren nach Anspruch 11.

13. Folie oder Film mit der Zusammensetzung nach Anspruch 1.

14. Mehrschichtige Folie oder mehrschichtiger Film mit der Zusammensetzung nach Anspruch 1.

15. Verpackungsmaterial, das die Folie oder den Film nach Anspruch 12 aufweist.

16. Artikel, hergestellt aus der Zusammensetzung nach Anspruch 1 in Form einer Tasche oder eines Beutels.

17. Artikel nach Anspruch 16, in dem ferner Reinigungsmittel enthalten sind, die aus der Gruppe ausgewählt sind, die aus Waschmitteln und Geschirrspülmitteln besteht.

18. Artikel nach Anspruch 16, in dem ferner Agrochemikalien enthalten sind, die aus der Gruppe ausgewählt sind, die aus Pestiziden und Herbiziden besteht.

## Revendications

1. Composition de polyamide hydrosoluble comprenant:
(a) de 70 à 99,5 pour cent en poids d'au moins un polyamide présentant une solubilité dans l'eau à 23°C d'au moins 1 pour cent en poids et dérivé de monomères comprenant l'acide adipique et au moins une étherdiamine de la formule générale (I) et/ou (II) possédant un poids moléculaire entre 148 et 396:
H₂N-R₁-O-R₂-O-R₃-NH₂ (I)
H₂N-R₄-(O-CH₂-CH₂)ₓ-O-R₅-NH₂ (I)
où R₁, R₂, R₃, R₄ et R₅ sont indépendamment soit (CH₂-CH₂), soit (CH₂-CH₂-CH₂) et x est un nombre entier entre 2 et 6, inclus; et
(b) de 0,5 à 30 pour cent en poids d'au moins une nanoargile.

2. Composition selon la revendication 1, dans laquelle la nanoargile est une nanoargile de smectite.

3. Composition selon la revendication 1, dans laquelle la nanoargile n'est pas traitée.

4. Composition selon la revendication 1, dans laquelle les monomères comprennent en outre un ou plusieurs lactames, diamines aliphatiques, acides dicarboxyliques aliphatiques autres que l'acide adipique et/ou acides polyéther dicarboxyliques.

5. Composition selon la revendication 1, dans laquelle les monomères comprennent en outre le caprolactame.

6. Solution pour une utilisation dans une coulée en films, comprenant:
(a) de 40 à 99 pour cent en poids d'un solvant comprenant de 80 à 100 pour cent en poids d'eau et de 0 à 20 pour cent en poids d'un ou de plusieurs alcools;
(b) de 1 à 60 pour cent en poids d'au moins un polyamide présentant une solubilité dans l'eau à 23°C d'au moins 1 pour cent en poids et dérivé de monomères comprenant l'acide adipique et au moins une étherdiamine de la formule générale (I) et/ou (II) possédant un poids moléculaire entre 148 et 396:
H₂N-R₁-O-R₂-O-R₃-NH₂ (I)
H₂N-R₄-(O-CH₂-CH₂)ₓ-O-R₅-NH₂ (I)
où R₁, R₂, R₃, R₄ et R₅ sont indépendamment soit (CH₂-CH₂), soit (CH₂-CH₂-CH₂) et x est un nombre entier entre 2 et 6, inclus; et
(c) de 0,5 à 30 pour cent en poids, sur la base du poids du polyamide hydrosoluble, d'au moins une nanoargile;
dans laquelle le polyamide est dissous dans le solvant et la nanoargile est dispersée dans le solvant.

7. Solution selon la revendication 6, dans laquelle la nanoargile est une nanoargile de smectite.

8. Solution selon la revendication 6, dans laquelle la nanoargile n'est pas traitée.

9. Solution selon la revendication 6, dans laquelle les monomères comprennent en outre un ou plusieurs lactames, diamines aliphatiques, acides dicarboxyliques aliphatiques autres que l'acide adipique et/ou acides polyéther dicarboxyliques.

10. Solution selon la revendication 6, dans laquelle le monomère comprend en outre le caprolactame.

11. Procédé pour la fabrication d'un film ou d'une feuille, comprenant la coulée en solution de la solution selon la revendication 6.

12. Feuille ou film fabriqué par le procédé selon la revendication 11.

13. Feuille ou film comprenant la composition selon la revendication 1.

14. Feuille ou film multicouche comprenant la composition selon la revendication 1.

15. Matériau d'emballage comprenant la feuille ou le film selon la revendication 12.

16. Article fabriqué à partir de la composition selon la revendication 1 sous la forme d'un sachet ou d'un sac.

17. Article selon la revendication 16, qui contient en outre des détergents à l'intérieur choisis dans le groupe constitué de détergents pour laver le linge et de détergents pour l'eau de vaisselle.

18. Article selon la revendication 16, qui contient en outre des produits chimiques agricoles à l'intérieur choisis dans le groupe constitué de pesticides et d'herbicides.
